# EUROPÄISCHE PATENTSCHRIFT

(11) **EP 3 164 646 B1**
(45) Veröffentlichungstag und Bekanntmachung des Hinweises auf die Patenterteilung: **27.09.2023**
(21) Anmeldenummer: 15731615.9
(22) Anmeldetag: 30.06.2015
(51) Int. Cl.: F24S 80/20, F28D 20/00, F28D 21/00

(54) **VORRICHTUNG ZUR WÄRMEÜBERTRAGUNG**
HEAT TRANSFER DEVICE
DISPOSITIF DE TRANSFERT THERMIQUE

(30) Priorität: 01.07.2014 EP 14175138
(43) Veröffentlichungstag der Anmeldung: 10.05.2017
(73) Patentinhaber: BASF SE, 67056 Ludwigshafen am Rhein (DE)
(72) Erfinder: WORTMANN, Jürgen, 67117 Limburgerhof (DE); LADENBERGER, Michael, 76855 Annweiler am Trifels (DE); FEDERSEL, Katharina, 69123 Heidelberg (DE); MAURER, Stephan, 67435 Neustadt (DE)
(74) Vertreter: BASF IP Association
(86) Internationale Anmeldenummer: PCT/EP2015/064774
(87) Internationale Veröffentlichungsnummer: WO 2016/001184

(56) Entgegenhaltungen:
- WO-A1-2008/027041
- WO-A2-2010/070195
- WO-A2-2011/104328

## Beschreibung

Die Erfindung geht aus von einer Vorrichtung zur Wärmeübertragung, umfassend einen Niedertemperaturwärmeübertrager und einen Hochtemperaturwärmeübertrager, wobei die Wärmeübertrager so mit einer Verbindungsleitung miteinander verbunden sind, dass ein Wärmeträgermedium den Hochtemperaturwärmeübertrager und den Niedertemperaturwärmeübertrager nacheinander durchströmt.

Um Wärmeübertrager effektiv und effizient betreiben zu können, wenn beabsichtigt ist, ein Medium zu überhitzen, werden üblicherweise mindestens zwei Wärmeübertrager in Reihe geschaltet, wobei in einem Wärmeübertrager das Medium zum Sieden gebracht wird, so dass gesättigter Dampf entsteht und in einem zweiten Wärmeübertrager der im ersten Wärmeübertrager erzeugte gesättigte Dampf überhitzt wird. Derartige Wärmeübertragerschaltungen werden zum Beispiel in Kraftwerken eingesetzt, in denen Turbinen zur Stromerzeugung mit überhitztem Dampf angetrieben werden.

Um zum Beispiel in solarthermischen Kraftwerken, beispielsweise Parabolrinnen-Solarkraftwerke oder Fresnel-Solarkraftwerke, elektrische Energie zu erzeugen, wird zunächst in geeigneten Receivern ein Wärmeträgermedium durch einstrahlende Solarenergie erwärmt. Für einen effizienten Betrieb des solarthermischen Kraftwerks wird als Wärmeträgermedium zum Beispiel eine Salzschmelze eingesetzt, die auf Temperaturen von mehr als 400°C erwärmt werden kann. Die erwärmte Salzschmelze wird dann genutzt, um Wasser vorzuwärmen, zu verdampfen und zu überhitzen. Durch den Einsatz der Salzschmelze ist es möglich, das Solarkraftwerk auch ohne solare Einstrahlung zu betreiben, beispielsweise nachts. Hierzu wird die erwärmte Salzschmelze in einem Behälter gespeichert, aus dem diese zur Verdampfung und Überhitzung des Wassers auch dann entnommen werden kann, wenn zu wenig solare Einstrahlung verfügbar ist. Eine Vorwärmung des Wassers kann auch mit heißer Salzschmelze erfolgen, die aus einem Bereich des Speichersystems stammt, das niedrigere Temperaturen aufweist als die Bereiche, aus denen Salzschmelze entnommen wird, die zur Verdampfung und Überhitzung des Wassers eingesetzt wird. Die Verdampfung des Wassers und Überhitzung des Wasserdampfs können auch durch eine oder mehrere Zwischenerhitzungsstufen unterstützt werden, die in einem oder auch mehreren Apparaten angeordnet sein können. Nach der Wärmeabgabe in geeigneten Wärmeübertragern zur Verdampfung und Überhitzung des Wassers wird die Salzschmelze in einen zweiten Behälter eingeleitet.

Sobald wieder ausreichend hohe solare Einstrahlung verfügbar ist, wird die Salzschmelze aus dem zweiten Behälter durch die Receiver geleitet, in denen diese erneut erwärmt wird. Als geeignete Salze für die Salzschmelze eignen sich zum Beispiel Nitrate oder Nitrite der Alkalimetalle, beispielsweise Kaliumnitrat, Kaliumnitrit, Natriumnitrat oder Natriumnitrit oder deren Mischungen. Ein geeignetes Salz ist zum Beispiel sogenanntes Solarsalz, eine Mischung aus Natriumnitrat und Kaliumnitrat im Verhältnis von 60 : 40.

Da in einem Verdampfer das Volumen der zu verdampfenden Flüssigkeit aufgrund des Phasenwechsels zunimmt und zudem ein Überhitzer wegen des niedrigeren Wärmeübertragungskoeffizienten eines Gases üblicherweise anders gestaltet wird als ein Verdampfer, erfolgt das Verdampfen und das Überhitzen in zwei unterschiedlichen Wärmeübertragern. Dabei können die Wärmeübertrager auch in einem einzigen Apparat mit Hochtemperatur- und Niedertemperaturabschnitten angeordnet sein.

Ein Wärmeübertrager zur Erzeugung von überhitztem Wasserdampf mittels Solarenergie ist beispielsweise in der WO-A 2011/104328 beschrieben.

Aufgrund der hohen Temperaturen, auf die das Salz in den Receivern erhitzt wird, können sich Zersetzungsprodukte bilden. Die Zersetzungsreaktionen sind bei vielen Wärmeträgern grundsätzlich reversibel. Die Regeneration bei tiefen Temperaturen wird allerdings durch zwei Effekte wesentlich gemindert. Zum einen ist die Löslichkeit leicht flüchtiger Komponenten, zum Beispiels von Gasen, in Wärmeträgern begrenzt. Werden ihre Löslichkeitsgrenzen überschritten, bedingt eine Ausgasung von Zersetzungsprodukten, dass die Reaktionspartner für eine Rückreaktion nicht mehr zusammen finden, da sie sich in unterschiedlichen Phasen befinden und die Überwindung der Phasengrenze, zum Beispiel durch Diffusionswiderstände, behindert ist. Dieses Problem kann durch Betrieb des Wärmeübertragers bei einem ausreichend hohen Druck gelöst werden. Zum anderen bewirkt eine Abkühlung der teilzersetzten Salzschmelze, dass die Reaktionsgeschwindigkeiten der Regenerierungsreaktionen sinken. Die Reaktionsgeschwindigkeiten sind in der Regel exponentiell von der Temperatur abhängig. Bei schnell sinkender Temperatur, wie es in einem Wärmeübertrager funktionsbedingt üblich ist, werden schnell Temperaturen erreicht, bei denen die Regenerationsgeschwindigkeiten so klein werden, dass praktisch keine Regeneration möglich wird. Über mehrere Arbeitszyklen hinweg können sich die Zersetzungsprodukte so weit akkumulieren, bis sich das Wärmeträgermedium so weit in seinen Eigenschaften verändert hat, dass es für eine Wärmeübertragung ungeeignet wird. Eine schädliche Veränderung ist beispielsweise die Ausbildung einer zu hohen Korrosivität.

Werden beispielsweise Nitrat- und Nitritsalze als Wärmeträger eingesetzt, führen hohe Temperaturen zur Zersetzung zu Oxiden und Stickoxiden. Diese Zersetzungsreaktion ist reversibel, wobei sich bei niedrigeren Temperaturen und einer ausreichend großen Verweilzeit aus den Nitratsalzen und Oxiden zum Beispiel in Gegenwart von Stickstoffmonoxid wieder Nitritsalze bilden. Zur Regeneration wird zum Beispiel ein Teil des Salzes aus dem Prozess entnommen und in geeigneten Apparaten wieder regeneriert. Dies erfordert einen zusätzlichen apparativen Aufwand, zudem ist es notwendig, den für die Regeneration entnommenen Anteil der Salzschmelze zu bevorraten und bei Bedarf in die salzführenden Rohrleitungen einzuspeisen. Zudem müssen für die Regeneration die notwendigen Mittel bereitgestellt werden. Insbesondere, wenn sich im Betrieb bildende Gase abgetrennt und ausgeschleust werden, müssen diese wieder für eine Regeneration bereitgestellt werden.

Aufgabe der vorliegenden Erfindung ist es, eine Vorrichtung zur Wärmeübertragung, umfassend einen Niedertemperaturwärmeübertrager und einen Hochtemperaturwärmeübertrager bereitzustellen, die eine Regeneration des Wärmeträgermediums ermöglicht.

Gelöst wird die Aufgabe durch eine Vorrichtung zur Erwärmung eines Mediums in zwei in Reihe geschalteten Wärmeübertragern durch Wärmeübertragung von einem Wärmeträgermedium an das zu erwärmende Medium, umfassend einen Niedertemperaturwärmeübertrager und einen Hochtemperaturwärmeübertrager sowie eine Salzschmelze als Wärmeträgermedium, wobei die Wärmeübertrager so mit einer Verbindungsleitung miteinander verbunden sind, dass das Wärmeträgermedium den Hochtemperaturwärmeübertrager und den Niedertemperaturwärmeübertrager nacheinander durchströmt, wobei in der Verbindungsleitung mindestens ein Verweilzeitbehälter angeordnet ist, der eingerichtet ist, ausreichend Zeit bereitzustellen, um das Wärmeträgermedium zu regenerieren.

Durch die Anordnung des Verweilzeitbehälters zwischen dem Hochtemperaturwärmeübertrager und dem Niedertemperaturwärmeübertrager gibt das Wärmeträgermedium zunächst Wärme an das zu erwärmende Fluid ab, wodurch sich die Temperatur des Wärmeträgermediums verringert. Durch den Verweilzeitbehälter wird dem Wärmeträgermedium bei der geringeren Temperatur eine ausreichende Zeit bereitgestellt, um sich zu regenerieren. So kann zum Beispiel eine bei hohen Temperaturen erfolgte Zersetzung des Wärmeträgermediums, die bei niedrigeren Temperaturen reversibel ist, in dem Verweilzeitbehälter wieder rückgängig gemacht werden. Die Temperatur des Verweilzeitbehälters wird dabei vorzugsweise so tief gewählt, dass einerseits die Regenerierungsreaktion thermodynamisch begünstigt ist. Andererseits wird die Temperatur vorzugsweise hoch genug gehalten, dass der thermisch teilzersetzte Wärmeträger sich kinetisch kontrolliert zu einem großen Anteil regenerieren kann. Hierdurch lässt sich das Wärmeträgermedium über einen längeren Zeitraum und viele Zyklen einsetzen und es ist nicht erforderlich, in relativ geringen Zeitabständen Teile des Wärmeträgermediums oder das gesamte Wärmeträgermedium aus dem Prozess zu entnehmen und einer externen Regeneration oder sogar einer Entsorgung zuzuführen.

Um eine Regeneration zu ermöglichen ist es besonders vorteilhaft, wenn sich durch die Zersetzung bildende Nebenprodukte nicht aus dem Prozess entfernt werden, sondern im Verweilzeitbehälter zur Regeneration des Wärmeträgermediums zur Verfügung stehen. Alternativ ist es auch möglich, gegebenenfalls für die Regeneration erforderliche Substanzen zuzuführen. Bevorzugt ist es jedoch, die bei einer reversiblen Zersetzung entstehenden Nebenkomponenten zur Regeneration im Verweilzeitbehälter zu nutzen.

Damit sich der Wärmeträger zu einem ausreichend großen Teil regeneriert, ist die Zeit zur Regeneration ausreichend hoch zu wählen. Eine ausreichend hohe Regenerationszeit ergibt sich bei einer betriebsbedingt vorgegebenen Stromstärke durch Wahl eines ausreichend großen Reaktionsvolumens. Beispielsweise kann der Verweilzeitbehälter für eine Mischung aus Nitratsalzen und Nitritsalzen bei 450°C so groß bemessen sein, dass eine halbe Stunde Regenerationszeit zur Verfügung steht.

Die Regenerierung kann durch Erhöhung der Stickoxidpartialdrucke gefördert werden.

Um große teure Verweilzeitbehälter zu vermeiden und um kleinere preiswertere Behälter einsetzen zu können, können zur Beschleunigung der Reaktion Regenerierungskatalysatoren hinzugefügt werden. Ein wirksamer Regenerierungskatalysator ist Wasser. Der Regenerierungskatalysator wird unter Druck vor dem Verweilzeitbehälter in den Wärmeträgerstrom injiziert. Hinter dem Verweilzeitbehälter kann durch Druckabsenkung und Ausgasung ein gasförmiger Katalysator aus dem Wärmeträgerstrom abgetrennt werden. Zur Zugabe des Regenerierungskatalysators weist die erfindungsgemäße Vorrichtung in einer Ausführungsform daher eine Zugabestelle für den Regenerierungskatalysator auf, die vor einem Verweilzeitbehälter positioniert ist.

Überschüssiges Wasser kann bei Nitrat- und Nitritsalzen die weitere Zersetzung fördern. Um eine wasserbedingte Zersetzung zu vermeiden, muss die Zugabe von Wasser als Regenerierungskatalysator dosiert werden. Die Dosierung des Regenerierungskatalysators kann durch analytische Mittel überwacht und geregelt werden. Als prozessanalytische Sensoren in einer Regelschleife können beispielsweise MS-, FTIR- und NDIR-Messsysteme eingesetzt werden. Diese können beispielsweise im Gasraum des Wärmeträgerstrom nach Druckabsenkung Wasser oder Stickoxide bestimmen. Eine alternative Messmethode im Regelkreis ist die elektrochemische Bestimmung des Oxoaziditätspotentials. Zur Dosierung des Regenerierungskatalysators umfasst die Vorrichtung daher vorzugsweise eine Steuerungseinheit oder eine Regeleinheit, mit der die Zugabe des Regenerierungskatalysators gesteuert und/oder geregelt wird. Die Steuerungseinheit oder Regeleinheit ist dabei so eingerichtet, dass die vorstehend beschriebenen Überwachungs- und Regelungsschritte automatisiert durchgeführt werden können.

Der Hochtemperaturwärmeübertrager und der Niedertemperaturwärmeübertrager können baulich getrennte Einheiten sein. Alternativ ist es jedoch auch möglich, dass der Hochtemperaturwärmeübertrager und der Niedertemperaturwärmeübertrager jeweils einen Abschnitt eines Wärmeübertragers bilden und die Verbindungsleitung aus dem vom Wärmeträgermedium durchströmten Bereich des Niedertemperaturwärmeübertragers abzweigt und in den vom Wärmeträgermedium durchströmten Bereich des Hochtemperaturwärmeübertragers mündet.

In einer bevorzugten Ausführungsform weist der vom Wärmeträgermedium durchströmte Bereich zwischen Niedertemperaturwärmeübertrager und Hochtemperaturwärmeübertrager eine Strömungssperre auf und die Verbindungsleitung verbindet den vom Wärmeträgermedium durchströmten Bereich des Niedertemperaturwärmeübertragers und des Hochtemperaturwärmeübertragers miteinander, so dass das Wärmeträgermedium aus dem den Hochtemperaturwärmeübertrager bildenden Abschnitt über die Verbindungsleitung in den den Niedertemperaturwärmeübertrager bildendenden Abschnitt oder aus dem den Niedertemperaturwärmeübertrager bildenden Abschnitt über die Verbindungsleitung in den den Hochtemperaturwärmeübertrager bildenden Abschnitt strömt.

Als Strömungssperre eignet sich zum Beispiel ein Trennboden oder ein Trennblech, mit dem der vom Wärmeträgermedium durchströmte Kanal verschlossen wird. Alternativ ist es auch möglich, einen ersten durchströmten Bereich für den den Niedertemperaturwärmeübertrager bildenden Abschnitt und einen zweiten baulich vom ersten durchströmten Bereich getrennten durchströmten Bereich für den den Hochtemperaturwärmeübertrager bildenden Abschnitt vorzusehen. Hierzu ist es zum Beispiel möglich, bei einem Rohrbündelwärmeübertrager oder einem Plattenwärmeübertrager zwei sich aneinander anschließende getrennte Mäntel, die vom Wärmeträgermedium durchströmt werden, vorzusehen.

Das Wärmeträgermedium und das zu erwärmende Fluid können den Niedertemperaturwärmeübertrager und den Hochtemperaturwärmeübertrager im Gleichstrom oder im Gegenstrom durchströmen. Auch ist eine Durchströmung im Kreuzstrom oder eine Kombination aus Kreuzstrom und Gegenstrom oder Kreuzstrom und Gleichstrom möglich. Hierbei können die Strömungsführungen im Hochtemperaturwärmeübertrager und im Niedertemperaturwärmeübertrager auch unterschiedlich sein, beispielsweise Gleichstrom im Hochtemperaturwärmeübertrager und Gegenstrom im Niedertemperaturwärmeübertrager oder umgekehrt. Bevorzugt ist es jedoch, wenn der Niedertemperaturwärmeübertrager und der Hochtemperaturwärmeübertrager jeweils beide im Gegenstrom oder beide im Gleichstrom durchströmt werden. Besonders bevorzugt ist es, wenn Hochtemperaturwärmeübertrager und Niedertemperaturwärmeübertrager im Gegenstrom vom Wärmeträger und dem zu erwärmenden Fluid durchströmt werden.

Weiterhin können entweder zuerst der Niedertemperaturwärmeübertrager und dann der Hochtemperaturwärmeübertrager vom Wärmeträgermedium durchströmt werden oder zuerst der Hochtemperaturwärmeübertrager und dann der Niedertemperaturwärmeübertrager. Bevorzugt ist es, wenn zuerst der Hochtemperaturwärmeübertrager und dann der Niedertemperaturwärmeübertrager vom Wärmeträgermedium durchströmt werden. Besonders bevorzugt ist hierbei die Kombination, bei der sowohl Hochtemperaturwärmeübertrager als auch Niedertemperaturwärmeübertrager im Gegenstrom durchströmt werden und das Wärmeträgermedium zuerst den Hochtemperaturwärmeübertrager und danach den Niedertemperaturwärmeübertrager durchströmt.

Unabhängig von der Strömungsrichtung und Reihenfolge der Durchströmung der Wärmeübertrager mit dem Wärmeträgermedium ist der Verweilzeitbehälter erfindungsgemäß immer in der Verbindungsleitung zwischen dem Niedertemperaturwärmeübertrager und dem Hochtemperaturwärmeübertrager angeordnet.

Um eine Regeneration des gesamten eingesetzten Wärmeträgermediums zu ermöglichen, muss vermieden werden, dass durch Vermischung ein Teil des Wärmeträgermediums unmittelbar nach dem Einleiten in den Verweilzeitbehälter wieder entnommen wird.

Hierzu ist es zum Beispiel möglich, den Verweilzeitbehälter in Form einer Rohrschlange zu gestalten, die von dem Wärmeträgermedium durchströmt wird. Die Verweilzeit wird dabei durch die Länge und den Durchmesser des Rohres der Rohrschlange, das von dem Wärmeträgermedium durchströmt wird, eingestellt. Je länger das Rohr bei gleichem Durchmesser oder je größer der Durchmesser bei gleicher Rohrlänge ist, umso länger ist die Verweilzeit im Rohr bei gleichbleibendem Volumenstrom.

Alternativ ist es auch möglich, als Verweilzeitbehälter einen Behälter einzusetzen, in dem Böden aufgenommen sind, wobei jeder Boden einen Ablauf aufweist und die Abläufe so angeordnet sind, dass diese jeweils abwechselnd an entgegengesetzten Enden angeordnet sind. Hierdurch strömt das Wärmeträgermedium jeweils durch einen Ablauf auf den darunter liegenden Boden, über den Boden zu dessen Ablauf und durch den Ablauf auf den darunter liegenden Boden. Dies führt zu einer mäandernden Strömung im Verweilzeitbehälter und damit zu einer ausreichenden Verweilzeit des gesamten Wärmeträgermediums. Die Länge der Verweilzeit lässt sich dabei durch die Anzahl der Böden und die Geometrie des Behälters einstellen.

In einer bevorzugten Ausführungsform umfasst der Verweilzeitbehälter zwei Speicherzellen, wobei die einzelnen Speicherzellen in Richtung vom Niedertemperaturwärmeübertrager zum Hochtemperaturwärmeübertrager jeweils über eine Verbindung vom unteren Bereich einer ersten Speicherzelle zum oberen Bereich einer benachbarten zweiten Speicherzelle miteinander verbunden sind. Durch diese Ausgestaltung wird zwar das Wärmeträgermedium in jeder einzelnen Speicherzelle durchmischt, da das Wärmeträgermedium aber mehrere Speicherzellen durchlaufen muss, wird auch hier die Verweilzeit ausreichend hoch gehalten. Zudem kann sich dadurch, dass eine Speicherzelle von oben befüllt und von unten entleert oder umgekehrt von unten befüllt und von oben entleert wird, eine Schichtenströmung in der Speicherzelle einstellen, durch die eine Durchmischung weitgehend vermieden wird.

In einer Ausführungsform der Erfindung umfasst die Verbindung zwischen zwei Speicherzellen einen Zellzwischenraum, wobei die Verbindung vom Zellzwischenraum zum oberen Bereich der zweiten Speicherzelle mit einem Überlauf und vom Zellzwischenraum zum unteren Bereich der ersten Speicherzelle durch eine Trennwand mit einer Öffnung ausgeführt ist, so dass bei einer Durchströmung der Speicherzellen vom Hochtemperaturwärmeübertrager zum Niedertemperaturwärmeübertrager die Flüssigkeit jeweils durch die Öffnung im unteren Bereich der Trennwand in den Zellzwischenraum strömt und über den Überlauf aus dem Zellzwischenraum in die zweite Speicherzelle oder bei Strömung in entgegengesetzter Richtung über den Überlauf in den Zellzwischenraum und durch die Öffnung im unteren Bereich der Trennwand aus dem Zellzwischenraum in die erste Speicherzelle fließt.

Alternativ ist es auch möglich, die Verbindung zwischen zwei Speicherzellen jeweils durch eine oder mehrere parallel verlaufende Rohrleitungen zu realisieren.

Weiterhin ist es bevorzugt, wenn mindestens eine Speicherzelle mit einem Deckel verschlossen ist, so dass sich zwischen der Flüssigkeit in der Speicherzelle und dem Deckel ein Gasraum ausbildet. Besonders bevorzugt ist es, wenn alle Speicherzellen mit einem Deckel verschlossen sind, um insbesondere dann, wenn sich gasförmige Nebenprodukte durch die Zersetzung des Wärmeträgers bilden, zu vermeiden, dass die gasförmigen Nebenprodukte an die Umgebung abgegeben werden.

Wenn nur eine Speicherzelle mit einem Deckel verschlossen ist, kann zum Beispiel diese Speicherzelle genutzt werden, um Gas zuzuführen, mit dem das Wärmeträgermedium regeneriert werden kann. In diesem Fall ist es weiterhin vorteilhaft, wenn das Wärmeträgermedium in der Speicherzelle durchmischt wird, damit ein möglichst großer Teil des Wärmeträgermediums mit dem Gas in Kontakt kommt. Bevorzugt ist es hierzu, dass das Gas über eine geeignete Zugabevorrichtung in das Wärmeträgermedium eingeblasen wird.

Um das Wärmeträgermedium gut regenerieren zu können, wenn sich dieses unter Ausbildung gasförmiger Nebenprodukte zersetzt, ist es vorteilhaft, wenn aus mindestens einem Gasraum eine Rohrleitung abzweigt, die in die Flüssigkeit einer Speicherzelle, die näher an dem Niedertemperaturwärmeübertrager positioniert ist oder in die Flüssigkeit in der Verbindung zweier benachbarter Speicherzellen eintaucht, wobei mindestens eine der benachbarten Speicherzellen eine niedrigere Temperatur aufweist als die Temperatur der Speicherzelle, aus deren Gasraum die Rohrleitung abzweigt. Diese Ausführungsform ist insbesondere dann vorteilhaft, wenn die Regeneration des Wärmeträgermediums mit abnehmenden Temperaturen verbessert wird. Sollte ein Wärmeträgermedium eingesetzt werden, bei dem die Regeneration mit zunehmender Temperatur verbessert wird, sollte die Rohrleitung nicht in die benachbarte Speicherzelle eintauchen, die näher an dem Niedertemperaturwärmeübertrager positioniert ist, sondern in die näher am Hochtemperaturwärmeübertrager positionierte Speicherzelle. Sollte im Betrieb das Wärmeträgermedium zuerst den Niedertemperaturwärmeübertrager und danach den Hochtemperaturwärmeübertrager durchströmen, ist es bevorzugt, wenn die Rohrleitung genau in die entgegengesetzte Richtung verläuft, das heißt, bei einer besseren Regeneration bei niedrigeren Temperaturen in eine näher zum Hochtemperaturwärmeübertrager mündende Speicherzelle und bei einer besseren Regeneration bei höheren Temperaturen in eine näher zum Niedertemperaturwärmeübertrager positionierte Speicherzelle.

Durch die aus dem Gasraum abzweigende Rohrleitung kann das Gas aus einem Gasraum in eine andere Speicherzelle mit anderer Temperatur strömen und dort mit dem Wärmeträgermedium bei einer geeigneteren Temperatur zur Regeneration reagieren.

In den benachbarten Speicherzellen stellen sich dabei Temperaturunterschiede ein, die aus einer nicht idealen Isolierung oder bei längerer Verweilzeit aufgrund von Wärmeaustauscheffekten in einer Speicherzelle resultieren. Weiterhin können sich Temperaturunterschiede durch Energieaufnahme bei einer endothermen Regeneration oder Wärmeabgabe bei einer exothermen Regeneration ergeben.

Neben der Gestaltung, bei der nur eine Rohrleitung aus mindestens einem Gasraum einer Speicherzelle abzweigt, ist es auch möglich, dass zwei Rohrleitungen aus einem Gasraum abzweigen. Wenn die erste Rohrleitung in eine Speicherzelle mündet, die näher zum Niedertemperaturwärmeübertrager positioniert ist, taucht die zweite Rohrleitung in die Flüssigkeit einer Speicherzelle ein, die näher zum Hochtemperaturwärmeübertrager positioniert ist. Entsprechend taucht die zweite Rohrleitung in eine näher zum Niedertemperaturwärmeübertrager positionierte Speicherzelle ein, wenn die erste Rohrleitung in ein eine näher zum Hochtemperaturwärmeübertrager positionierte Speicherzelle mündet.

Neben der geeigneten Verweilzeit und der Einleitung des Gases in eine Speicherzelle mit einer geeigneten Temperatur für die Regeneration haben die Rohrleitungen, die in die Flüssigkeit einer anderen Speicherzelle eintauchen insbesondere den Vorteil, dass Druckdifferenzen in den Gasräumen ausgeglichen werden können.

Um weiterhin zu ermöglichen, dass Gas aus einem Gasraum gezielt nur in eine Richtung strömen kann, ist es weiterhin möglich, in einer oder mehreren Rohrleitungen, die aus den jeweiligen Gasräumen abzweigen, Ventile vorzusehen, mit denen die Rohrleitungen geöffnet oder verschlossen werden können.

Um einen Gasausgleich in der gesamten Vorrichtung zu ermöglichen, ist es besonders bevorzugt, wenn alle Speicherzellen mit einem Deckel verschlossen sind und aus allen Speicherzellen außer derjenigen, die am nähesten zum Niedertemperaturwärmeübertrager positioniert ist, am Deckel eine Rohrleitung abzweigt, die in der benachbarten Speicherzelle, die näher zum Niedertemperaturwärmeübertrager positioniert ist, oder in der Verbindung der Speicherzelle zur benachbarten Speicherzelle, die näher zum Niedertemperaturwärmeübertrager positioniert ist, mündet, und aus dem Deckel der Speicherzelle, die am nähesten zum Niedertemperaturwärmeübertrager positioniert ist, ein Gasauslass abzweigt.

Wenn alternativ oder zusätzlich auch Rohrleitungen vorgesehen sind, die in die Flüssigkeit einer näher zum Hochtemperaturwärmeübertrager positionierten Speicherzelle eintauchen, ist es weiterhin besonders bevorzugt, wenn alle Speicherzellen mit einem Deckel verschlossen sind und aus allen Speicherzellen außer der, die am nähesten zum Hochtemperaturwärmeübertrager positioniert ist, eine Rohrleitung aus dem Deckel abzweigt, die in die Flüssigkeit der benachbarten Speicherzelle, die näher zum Hochtemperaturwärmeübertrager positioniert ist, eintaucht.

Neben dem Eintauchen der Rohleitungen in die jeweils benachbarte Speicherzelle ist selbstverständlich auch jede andere Ausgestaltung möglich. So ist es zum Beispiel möglich, dass die Rohrleitungen nicht in die unmittelbar benachbarte Speicherzelle münden, sondern zum Beispiel jeweils mindestens eine Speicherzelle übersprungen wird. In diesem Fall können dann die Rohrleitungen aus den Gasräumen der Speicherzellen, für die keine entsprechenden Speicherzellen mehr vorliegen, die näher zum Niedertemperaturwärmeübertrager oder näher zum Hochtemperaturwärmeübertrager positioniert sind, zum Beispiel jeweils in die am nähesten zum Niedertemperaturwärmeübertrager positionierte Speicherzelle oder in die am nähesten zum Hochtemperaturwärmeübertrager positionierte Speicherzelle münden. Alternativ ist es auch möglich, mehrere Gasauslässe vorzusehen und das Gas aus den Speicherzellen, für die keine entsprechenden näher zum Niedertemperaturwärmeübertrager oder näher zum Hochtemperaturwärmeübertrager positionierte Speicherzellen mehr existieren, in die die Rohrleitung münden kann, zu entnehmen.

Um eine besonders gute Gasverteilung in der Flüssigkeit zu erzielen, insbesondere dann, wenn das Gas durch Zersetzung des Wärmeträgermediums entstehende Nebenkomponenten enthält, die durch eine reversible Reaktion im Wärmeträgermedium wieder zur Regeneration genutzt werden können, ist es bevorzugt, wenn an mindestens einem in die Flüssigkeit eingetauchten Ende der Rohrleitung ein Gasverteiler ausgebildet ist, mit dem durch die Rohrleitung strömendes Gas in Form kleiner Bläschen in der Flüssigkeit verteilt wird. Besonders bevorzugt ist es, wenn an allen in die Flüssigkeit eingetauchten Enden der Rohrleitungen ein Gasverteiler ausgebildet ist, mit dem durch die Rohrleitungen strömendes Gas in Form kleiner Bläschen in der Flüssigkeit verteilt wird. Ein entsprechender Gasverteiler kann zum Beispiel in Form einer Verschlussplatte mit vielen kleinen Öffnungen gestaltet sein. Um den Druckverlust möglichst gering zu halten, ist es hierbei vorteilhaft, am Ende der Rohrleitung eine Durchmessererweiterung vorzusehen, die mit der Platte verschlossen wird. Alternativ können auch beliebige andere Gasverteiler eingesetzt werden, zum Beispiel Ringverteiler oder Rohrleitungen, in denen kleine Öffnungen vorgesehen sind, durch die das Gas entweichen kann. Zusätzlich kann eine große Gas-Flüssiggrenzfläche durch übliche Einbauten oder Füllungen in den Speicherzellen realisiert werden.

Damit die Kontaktzeit des Gases in der Flüssigkeit möglichst groß ist, ist es weiterhin bevorzugt, wenn die aus dem Deckel abzweigenden Rohrleitungen mindestens in das untere Drittel der Flüssigkeit eintauchen, wenn die Speicherzelle bis zum Überlauf befüllt ist. Hierdurch muss das Gas durch eine lange Flüssigkeitsstrecke nach oben strömen, bis es den Gasraum der Speicherzelle erreicht. Da durch das Eintauchen der hydraulische Druck in der Flüssigkeit überwunden werden muss, damit das Gas aus der Rohrleitung in die Flüssigkeit einströmen kann, ist es weiterhin bevorzugt, in der Rohrleitung einen Verdichter aufzunehmen, mit dem das Gas in die Flüssigkeit der benachbarten Speicherzelle oder den Zellzwischenraum transportiert wird. Der Verdichter ist dabei so auszulegen, dass der hydraulische Druck der Flüssigkeit am Rohrleitungsende überwunden werden kann, damit das Gas entsprechend durch die Rohrleitung strömt. Ein weiterer Vorteil des Einsatzes eines Verdichters ist, dass ein gezielter Abzug von Gas aus einem Gasraum einer Speicherzelle möglich ist. Anders als bei der Ausführungsform ohne Verdichter kann Gas auch dann entnommen und einer benachbarten Speicherzelle zugeführt werden, wenn der Druck im Gasraum noch niedriger ist als der Druck an der Stelle, an der die Rohrleitung in der Flüssigkeit mündet.

In einer Ausführungsform der Erfindung ist in der Verbindung zwischen zwei benachbarten Speicherzellen eine Vorrichtung zur Förderung der Flüssigkeit angeordnet. Durch die Vorrichtung zur Förderung der Flüssigkeit ist es möglich, die Flüssigkeit unabhängig vom hydrostatischen Druck in eine benachbarte Speicherzelle zu fördern. Dies erlaubt zum Beispiel auch dann einen Transport, wenn zwei Speicherzellen gleich hoch gefüllt sind oder sogar dann, wenn die Speicherzelle, aus der Flüssigkeit entnommen wird, einen niedrigeren Füllstand hat als die benachbarte Speicherzelle, in die die Flüssigkeit transportiert wird. Hierdurch wird unabhängig von den Füllständen in den einzelnen Speicherzellen der Betrieb der Vorrichtung sichergestellt. Somit ist es zum Beispiel nicht erforderlich, dass alle Speicherzellen auf gleicher Höhe stehen und gleich hoch befüllt sind. Die Vorrichtung zur Förderung der Flüssigkeit erlaubt es auch, gleich gestaltete Speicherzellen, die vorzugsweise jeweils eine gleiche Füllhöhe haben, auf unterschiedlichem Bodenniveau zu platzieren.

Als Vorrichtung zur Förderung der Flüssigkeit wird üblicherweise eine Pumpe eingesetzt. Hierbei ist jede beliebige Pumpe, z. B eine Tauchpumpe,einsetzbar, die den gewünschten Flüssigkeitsdurchsatz bereitstellen kann und für die Förderung des eingesetzten Wärmeträgermediums geeignet ist.

Wenn zwischen zwei benachbarten Speicherzellen ein Zellzwischenraum ausgebildet ist, durch den die Flüssigkeit transportiert wird, ist es vorteilhaft, die Vorrichtung zur Förderung der Flüssigkeit in der Öffnung im unteren Bereich der ersten Speicherzelle zu positionieren. Um einen Transport der Flüssigkeit sowohl von der ersten in die benachbarte zweite Speicherzelle als auch in entgegengesetzter Richtung zu ermöglichen, ist es möglich, zwei Pumpen mit jeweils entgegengesetzter Förderrichtung einzusetzen und dann jeweils die Pumpe zu betreiben, mit der die Flüssigkeit in die gewünschte Richtung gefördert wird. Alternativ ist es auch möglich, eine Pumpe einzusetzen, mit der eine Förderumkehr möglich ist, so dass mit der gleichen Pumpe je nach Bedarf Flüssigkeit von der ersten in die benachbarte zweite Speicherzelle oder umgekehrt von der zweiten Speicherzelle in die erste Speicherzelle gefördert werden kann.

Bei einer Verbindung von zwei Speicherzellen über eine Rohrleitung kann die Vorrichtung zur Förderung der Flüssigkeit an jeder beliebigen Position in der Rohrleitung platziert werden. Insbesondere bei Verbindung von zwei Speicherzellen über eine Rohrleitung ist es bevorzugt, wenn als Vorrichtung zur Förderung der Flüssigkeit eine Pumpe eingesetzt wird, bei der sich die Förderrichtung umkehren lässt. Alternativ ist es in diesem Fall auch möglich, die Rohrleitung mit einem Bypass zu gestalten, wobei eine erste Pumpe im Bereich des Bypasses in der Rohrleitung und eine zweite Pumpe im Bypass angeordnet sind, so dass je nach Förderrichtung die Flüssigkeit entweder durch die Rohrleitung oder durch den Bypass gefördert wird. Neben der Gestaltung mit einem Bypass ist es weiterhin selbstverständlich auch möglich, zwei benachbarte Speicherzellen jeweils mit zwei Rohrleitungen zu verbinden, wobei in jeder Rohrleitung eine Vorrichtung zur Förderung einer Flüssigkeit eingesetzt ist und die Förderrichtungen der Vorrichtungen zur Förderung der Flüssigkeit in den Rohrleitungen entgegengesetzt sind.

Insbesondere in Verbindung mit der Vorrichtung zur Förderung der Flüssigkeit zwischen zwei Speicherzellen ist es bevorzugt, in den Speicherzellen eine Füllstandssteuerung zu installieren, die so eingerichtet ist, dass bei Erreichen eines maximalen Füllstandes Flüssigkeit in eine benachbarte Speicherzelle gefördert wird. Hierdurch ist es möglich, gezielt Flüssigkeit aus einer Speicherzelle zu entfernen, wenn der maximale Füllstand überschritten wird. Hierdurch kann zum Beispiel sichergestellt werden, dass immer ein minimaler Gasraum über der Flüssigkeit vorhanden ist. Zudem kann eine Überbefüllung der Speicherzelle, die dann zu einem Druckanstieg führen kann, vermieden werden.

Neben einer Füllstandssteuerung, bei der bei Erreichen eines maximalen Füllstandes Flüssigkeit in eine benachbarte Speicherzelle gefördert wird, ist es auch möglich, eine Füllstandssteuerung vorzusehen, die so eingerichtet ist, dass bei Unterschreiten eines minimalen Füllstandes Flüssigkeit aus einer benachbarten Speicherzelle in die Speicherzelle gefördert wird. Dies kann insbesondere für einen sicheren Betrieb notwendig sein, um zum Beispiel zu vermeiden, dass Pumpen trockenlaufen können.

Wenn die einzelnen Speicherzellen unterschiedlich temperiert sein sollen, zum Beispiel eine Temperaturabnahme von der am nähesten zum Hochtemperaturwärmeübertrager positionierten Speicherzelle bis zu der am nähesten zum Niedertemperaturwärmeübertrager positionierten Speicherzelle, ein Temperaturausgleich zwischen Speicherzellen vermieden werden soll und weiterhin thermische Ausdehnungen aufgrund von Temperaturwechseln ausgeglichen werden sollen, ist es selbstverständlich auch möglich, zwischen die Speicherzellen temperatur- und druckbeständiges Dämmmaterial einzubringen. Hierbei ist es insbesondere bevorzugt, wenn zwischen benachbarten Speicherzellen in der schneckenförmigen Anordnung, die nicht über einen Zellzwischenraum miteinander verbunden sind, eine thermische Isolierung aufgenommen ist.

Zur Befüllung und Entleerung können Verbindungen zwischen den Speicherzellen vorgesehen werden. Diese sind einerseits so eng auszuführen, dass nur wenig Salz durch sie hindurch gefördert werden kann und nur eine nicht ins Gewicht fallende Leckage auftritt. Auf der anderen Seite sind sie ausreichend groß zu dimensionieren, damit die Befüllung und Entleerung des Verweilzeitbehälters in für den Betreiber akzeptablen Zeiten möglich ist.

Die erfindungsgemäße Vorrichtung kann überall eingesetzt werden, wo ein Medium in zwei in Reihe geschalteten Wärmeübertragern erwärmt wird und das Wärmeträgermedium vorteilhafterweise bei einer Temperatur, die unterhalb der Zufuhrtemperatur zum ersten Wärmeübertrager und oberhalb der Ablauftemperatur aus dem zweiten Wärmeübertrager liegt, zwischengespeichert wird, zum Beispiel für eine Regeneration.

Besonders vorteilhaft kann die erfindungsgemäße Vorrichtung eingesetzt werden, wenn ein Fluid in einem ersten Wärmeübertrager verdampft und in einem zweiten Wärmeübertrager überhitzt wird und ein Wärmeträgermedium eingesetzt wird, das bei den hohen Temperaturen zur Überhitzung zersetzt werden kann, und sich bei etwas niedrigeren Temperaturen wieder regenerieren lässt.

In einer Anwendung, bei der ein Fluid zuerst verdampft und dann überhitzt wird, ist der Niedertemperaturwärmeübertrager ein Verdampfer und der Hochtemperaturwärmeübertrager ein Überhitzer. Als Fluid, das verdampft und dann überhitzt wird, kann zum Beispiel Wasser eingesetzt werden. Überhitztes Wasser findet zum Beispiel in Kraftwerken Einsatz, in denen mit dem überhitzten Dampf eine Turbine angetrieben wird, mit der wiederum ein Generator zur Erzeugung von elektrischem Strom angetrieben wird.

Besonders bevorzugt wird die erfindungsgemäße Vorrichtung in einem Solarkraftwerk, insbesondere einem linear konzentrierenden Solarkraftwerk, beispielsweise einem Parabolrinnen-Solarkraftwerk oder Fresnel-Solarkraftwerk, oder auch einem solaren Turmkraftwerk eingesetzt.

Bei Einsatz in einem Solarkraftwerk wird als Wärmeträgermedium eine Salzschmelze, beispielsweise eine Mischung aus Nitraten und/oder Nitriten der Alkalimetalle, insbesondere Natriumnitrit, Natriumnitrat, Kaliumnitrit, Kaliumnitrat oder eine beliebige Mischung daraus, eingesetzt.

Da sich insbesondere Nitritsalze bei hohen Temperaturen in Oxide und Nitratsalze unter Abspaltung von Stickstoffmonoxid zersetzen können, wobei die Reaktion reversibel ist, findet die erfindungsgemäße Vorrichtung besonders bevorzugt Einsatz zur Überhitzung von Wasserdampf in einem Solarkraftwerk, in dem als Wärmeträgermedium eine Salzschmelze eingesetzt wird, die auch Nitritsalze enthält. In dem Verweilzeitbehälter kann das Salz durch die bei niedrigerer Temperatur ablaufende Reaktion, bei der sich aus dem Nitratsalz, dem Oxid und Stickstoffmonoxid wieder ein Nitritsalz bildet, regeneriert werden.

Ausführungsbeispiele sind in den Figuren dargestellt und werden in der nachfolgenden Beschreibung näher erläutert.

Es zeigen:
- Figur 1: eine schematische Darstellung einer Vorrichtung mit Niedertemperaturwärmeübertrager, Hochtemperaturwärmeübertrager und Verweilzeitbehälter,
- Figur 2: einen Verweilzeitbehälter mit mehreren in Reihe geschalteten Speicherzellen,
- Figur 3: einen Verweilzeitbehälter in einer weiteren alternativen Ausführungsform,
- Figur 4: einen Verweilzeitbehälter in einer vierten alternativen Ausführungsform,
- Figur 5: eine Ausführungsform der Erfindung, bei der ein Hochtemperaturwärmeübertrager und ein Niedertemperaturwärmeübertrager in einem Apparat angeordnet sind.

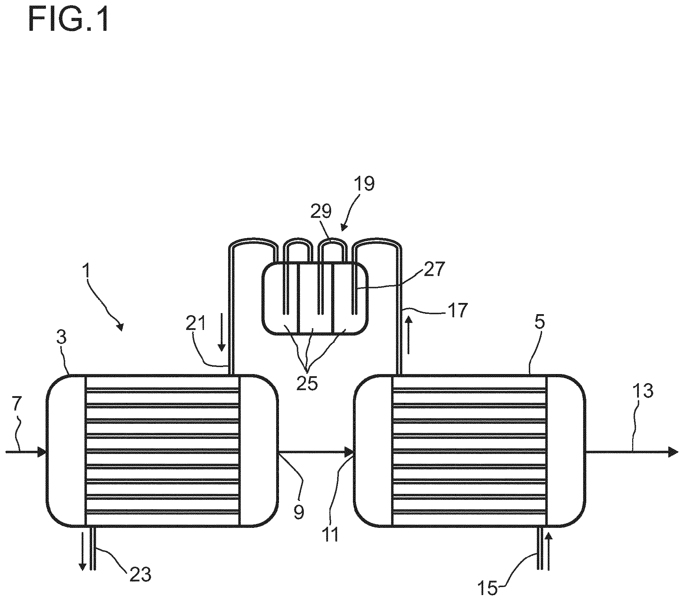

In Figur 1 ist eine Vorrichtung mit einem Niedertemperaturwärmeübertrager, einem Hochtemperaturwärmeübertrager und einem Verweilzeitbehälter schematisch dargestellt.

Eine Vorrichtung 1 mit einem Niedertemperaturwärmeübertrager 3 und einem Hochtemperaturwärmeübertrager 5 kann zum Beispiel zum Verdampfen und Überhitzen von Wasser eingesetzt werden. In diesem Fall ist der Niedertemperaturwärmeübertrager 3 ein Verdampfer und der Hochtemperaturwärmeübertrager 5 ein Überhitzer.

Der Niedertemperaturwärmeübertrager 3 und der Hochtemperaturwärmeübertrager 5 können zum Beispiel - wie hier dargestellt - jeweils als Rohrbündelwärmeübertrager ausgebildet sein. Alternativ ist aber auch jede andere, dem Fachmann bekannte Bauart für Wärmeübertrager einsetzbar. So können zum Beispiel auch Plattenwärmeübertrager, Spiralwärmeübertrager oder jede beliebige Kombination unterschiedlicher Wärmeübertragerbauarten eingesetzt werden.

Weiterhin ist es auch möglich, dass der Niedertemperaturwärmeübertrager 3 und der Hochtemperaturwärmeübertrager 5 baulich in einem Apparat zusammengefasst sind.

Im Betrieb tritt ein zu erwärmendes Fluid über einen Zulauf 7 in den Niedertemperaturwärmeübertrager 3 ein und wird in diesem erwärmt. Wenn der Niedertemperaturwärmeübertrager 3 ein Verdampfer ist, wird das Fluid in diesem verdampft, so dass gesättigter Dampf, gegebenenfalls auch bereits leicht überhitzter Dampf entsteht. Das im Niedertemperaturwärmeübertrager 3 erwärmte Fluid wird an einem Auslass 9 entnommen und über einen Zulauf 11 dem Hochtemperaturwärmeübertrager zugeführt. Im Hochtemperaturwärmeübertrager 5 wird das Fluid weiter erhitzt oder, wenn der Hochtemperaturwärmeübertrager 5 ein Überhitzer ist, wird das als Dampf zugeführte Fluid im Hochtemperaturwärmeübertrager 5 überhitzt. Das erwärmte Fluid beziehungsweise der überhitzte Dampf tritt dann an einem Auslass 13 aus dem Hochtemperaturwärmeübertrager aus und kann einer weiteren Verwendung zugeführt werden, beispielsweise einer Turbine zum Antrieb eines Generators zur Stromerzeugung, wenn die Vorrichtung 1 in einem Kraftwerk, beispielsweise einem Solarkraftwerk eingesetzt wird.

Wenn der Niedertemperaturwärmeübertrager 3 und der Hochtemperaturwärmeübertrager 5 eine bauliche Einheit bilden, tritt das in dem den Niedertemperaturwärmeübertrager 3 bildenden Teil erwärmte Fluid direkt in den den Hochtemperaturwärmeübertrager 5 bildenden Teil ein.

Zur Erwärmung des Fluids wird ein Wärmeträgermedium eingesetzt. Dieses wird in der hier dargestellten Ausführungsform im Gegenstrom zum zu erwärmenden Fluid geführt. Über einen Wärmeträgerzulauf 15 wird das Wärmeträgermedium dem Hochtemperaturwärmeübertrager 5 zugeführt. Im Hochtemperaturwärmeübertrager 5 gibt das Wärmeträgermedium Wärme an das zu erwärmende Fluid ab und verlässt anschließend den Hochtemperaturwärmeübertrager 5 über einen Wärmeträgerablauf 17. Erfindungsgemäß mündet eine den Wärmeträgerablauf 17 bildende Rohrleitung in einem Verweilzeitbehälter 19.

Nach dem Durchlaufen durch den Verweilzeitbehälter 19 wird das Wärmeträgermedium über einen Wärmeträgerzulauf 21 dem Niedertemperaturwärmeübertrager 3 zugeführt. Im Niedertemperaturwärmeübertrager 3 gibt das Wärmeträgermedium Wärme an das zu erwärmende Fluid ab und verlässt dann den Niedertemperaturwärmeübertrager 3 über einen Wärmeträgerablauf 23.

Im Verweilzeitbehälter 19 kann das Wärmeträgermedium zum Beispiel regeneriert werden, wenn dies bei einer niedrigeren Temperatur als der maximalen Temperatur, auf die das Wärmeträgermedium erhitzt wird, möglich ist und sich zudem das Wärmeträgermedium bei der maximalen Temperatur reversibel verändert. Derartige Wärmeträgermedien sind beispielsweise, wie vorstehend bereits erwähnt, Nitritsalze, die bei hohen Temperaturen unter Abspaltung von Stickstoffmonoxid zu Oxid und Nitratsalz reagieren. Bei niedrigeren Temperaturen und einer ausreichend langen Verweilzeit reagieren das Nitratsalz und das Oxid mit dem Stickstoffmonoxid wieder zum Nitritsalz.

In der in Figur 1 dargestellten Ausführungsform weist der Verweilzeitbehälter 19 mehrere Speicherzellen 25 auf. Über eine erste Rohrleitung 27 wird das Wärmeträgermedium nach dem Durchlaufen des Hochtemperaturwärmeübertragers 3 in eine erste Speicherzelle des Verweilzeitbehälters 19 eingeleitet. Die erste Rohrleitung 27 mündet dabei im unteren Bereich, so dass das Wärmeträgermedium unten in die erste Speicherzelle eingebracht wird und das bereits in der Speicherzelle enthaltene Wärmeträgermedium nach oben verdrängt wird. Oben ist die Speicherzelle 25 verschlossen und aus dem Deckel zweigt eine zweite Rohrleitung 29 ab, die im unteren Bereich einer zweiten Speicherzelle 25 endet. Das verdrängte Wärmeträgermedium wird so in die zweite Rohrleitung 29 gedrückt und durch die zweite Rohrleitung in die zweite Speicherzelle 25. Dies kann mit beliebig vielen Speicherzellen wiederholt werden, wobei die Anzahl der Speicherzellen von deren Größe und der gewünschten Verweilzeit des Wärmeträgermediums im Verweilzeitbehälter 19 abhängt.

Aus der letzten Speicherzelle 25 zweigt dann eine Rohrleitung ab, die den Zulauf 21 zum Niedertemperaturwärmeübertrager 3 bildet.

Alternativ zu der hier dargestellten Strömungsrichtung ist es auch möglich, dass das Wärmeträgermedium im Niedertemperaturwärmeübertrager 3 und im Hochtemperaturwärmeübertrager 5 jeweils im Gleichstrom zum zu erwärmenden Fluid geführt wird. Auch in diesem Fall kann das Wärmeträgermedium zuerst den Hochtemperaturwärmeübertrager 5 und danach den Niedertemperaturwärmeübertrager 3 durchströmen. Weiterhin ist es unabhängig von der Durchströmung von Niedertemperaturwärmeübertrager 3 und Hochtemperaturwärmeübertrager 5 auch möglich, dass zuerst der Niedertemperaturwärmeübertrager 3 und danach der Hochtemperaturwärmeübertrager 5 vom Wärmeträgermedium durchströmt werden.

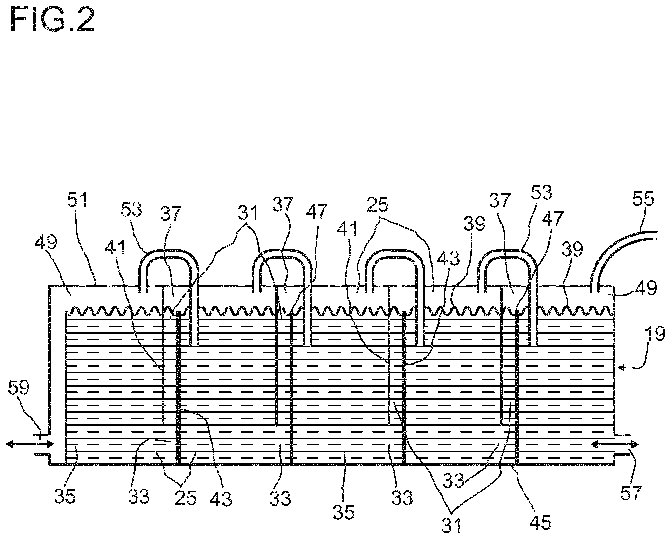

In Figur 2 ist ein Verweilzeitbehälter dargestellt, der aus mehreren Speicherzellen aufgebaut ist.

In der in Figur 2 dargestellten Ausführungsform umfasst der Verweilzeitbehälter 19 mehrere Speicherzellen 25. Jeweils zwei benachbarte Speicherzellen 25 weisen eine Verbindung auf, die so gestaltet ist, dass der untere Bereich einer Speicherzelle 25 mit dem oberen Bereich einer benachbarten Speicherzelle 25 verbunden ist. Die Verbindung ist hier in Form eines Zellzwischenraums 31 gestaltet. Damit der Flüssigkeitstransport über den Zellzwischenraum 31 realisiert werden kann, ist der Zellzwischenraum 31 über eine untere Öffnung 33 mit dem unteren Bereich 35 der einen Speicherzelle 25 und über eine obere Öffnung 37 mit dem oberen Bereich 39 der benachbarten Speicherzelle 25 verbunden. Der Zellzwischenraum 31 und die Öffnungen 33, 37 können zum Beispiel so realisiert werden, dass der Zellzwischenraum 31 zur einen Speicherzelle 25 mit einer ersten Wandung 41 und zur benachbarten zweiten Speicherzelle 25 mit einer zweiten Wandung 43 abgegrenzt ist. Die erste Wandung 41 endet dabei oberhalb des Bodens 45 der Speicherzelle 25 und des Zellzwischenraums 31 so, dass zwischen Boden 45 und erster Wandung 41 die untere Öffnung 33 ausgebildet wird. Alternativ ist es selbstverständlich auch möglich, eine ausreichend große Öffnung in der ersten Wandung 41 auszubilden. Demgegenüber steht die zweite Wandung 43 auf dem Boden zwischen Zellzwischenraum 31 und der benachbarten Speicherzelle 25, wobei die zweite Wandung 43 unterhalb der maximalen Füllhöhe der Speicherzelle 25 in einem Überlauf 47 endet, so dass die Flüssigkeit aus der einen Speicherzelle 25 über den Überlauf in den Zellzwischenraum 31 strömt. Alternativ zum Überlauf 47 ist es auch möglich, an der entsprechenden Position in der zweiten Wandung 43 eine Öffnung auszubilden, durch die die Flüssigkeit strömen kann.

Oberhalb der Flüssigkeit befindet sich in jeder Speicherzelle 25 ein Gasraum 49. Der Gasraum 49 ist mit einem Deckel 51 verschlossen. Aus dem Gasraum 49 zweigt eine Rohrleitung 53 ab. Die Rohrleitung 53 ist dabei so geführt, dass diese in der Flüssigkeit einer benachbarten Speicherzelle 25 mündet. Damit sich in der letzten Speicherzelle 25 kein Überdruck aufbaut, ist diese mit einem Gasauslass 55 versehen, durch den das Gas abgezogen werden kann. Das aus dem Gasauslass 55 abgezogene Gas kann entweder an die Umgebung abgegeben werden oder bevorzugt zum Beispiel über einen separaten Gaszulauf wieder in eine Speicherzelle 25 zugeführt werden.

Eingeleitet wird die Flüssigkeit in den Verweilzeitbehälter über einen Zulauf 57 und abgeführt über einen Ablauf 59. Hierbei befindet sich entweder der Zulauf 57 im unteren Bereich einer Speicherzelle 25 und der Ablauf im oberen Bereich oder am Ende eines Zellzwischenraums 31 oder der Zulauf befindet sich im oberen Bereich und der Ablauf im unteren Bereich.

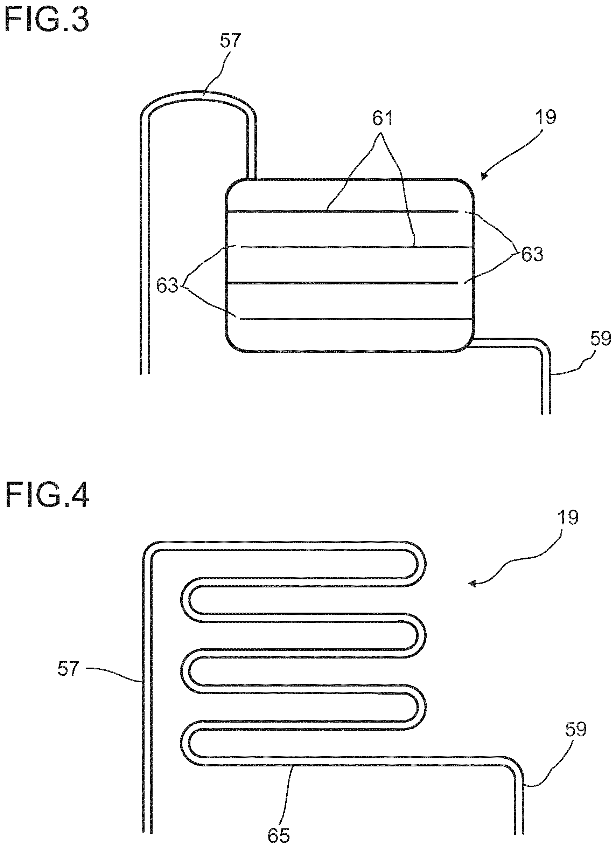

Figur 3 zeigt einen Verweilzeitbehälter in einer weiteren Ausführungsform.

In der in Figur 3 dargestellten Ausführungsform weist der Verweilzeitbehälter mehrere Böden 61 auf. Die Böden 61 sind so gestaltet, dass die Flüssigkeit über den Zulauf 57 auf den obersten Boden strömt. Der Zulauf befindet sich dabei auf einer Seite des Bodens. Auf der dem Zulauf abgewandten Seite des Bodens ist ein Ablauf 63 ausgebildet, der gleichzeitig als Zulauf für den darunter liegenden Boden 61 dient. Die Flüssigkeit strömt durch den Ablauf 63 auf den darunter liegenden Boden 61, über den Boden 61 zu einem weiteren Ablauf 63, der wieder auf der entgegengesetzten Seite angeordnet ist. Dies wiederholt sich, bis der Ablauf 59 aus dem Verweilzeitbehälter erreicht worden ist. Durch die jeweils an entgegengesetzten Enden angeordneten Zuläufe und Abläufe 63 strömt die Flüssigkeit mäandernd durch den Verweilzeitbehälter 19.

Eine vierte Ausführungsform für einen Verweilzeitbehälter ist in Figur 4 dargestellt.

Im Unterschied zu den in den Figuren 1 bis 3 dargestellten Ausführungsformen ist der in Figur 4 dargestellte Verweilzeitbehälter 19 in Form einer Rohrschlange 65 ausgebildet. Das Wärmeträgermedium strömt über den Zulauf 57 in die Rohrschlage 65, durchströmt die Rohrschlange, wodurch die gewünschte Verweilzeit erzielt wird und verlässt die Rohrschlange 65 dann durch den Ablauf 59.

Bei den in den Figuren 1, 3 und 4 dargestellten Ausführungsformen wird das sich bildende Gas in Form dispergierter Blasen mit dem Wärmeträgermedium mitgerissen, so dass dieses für die Regeneration bei ausreichender Verweilzeit direkt mit den gebildeten Nebenprodukten zur Regeneration reagieren kann.

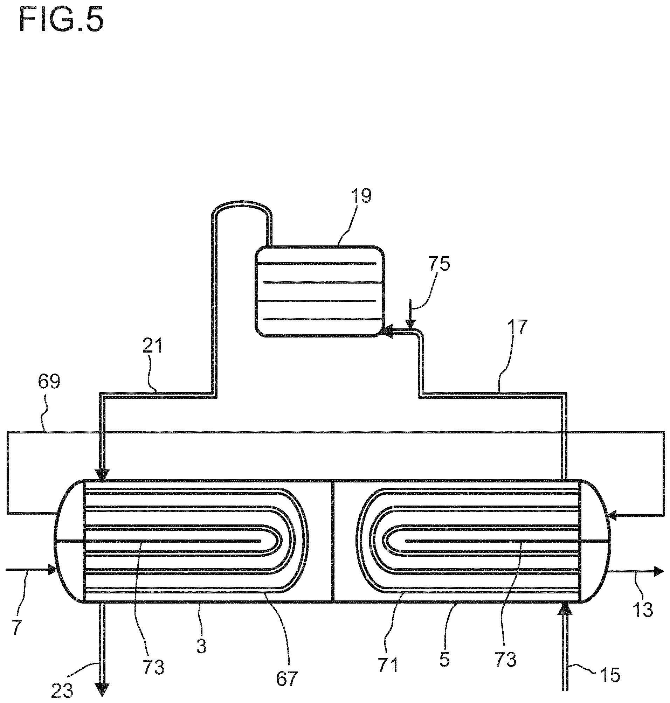

Figur 5 zeigt eine Ausführungsform der Erfindung, bei der Hochtemperaturwärmeübertrager und Niedertemperaturwärmeübertrager in einem Apparat angeordnet sind.

Bei der in Figur 5 dargestellten Ausführungsform bilden der Hochtemperaturwärmeübertrager 5 und der Niedertemperaturwärmeübertrager 3 jeweils einen Abschnitt der Vorrichtung 1. Hierbei wird das zu verdampfende und zu überhitzende Medium, beispielsweise Wasser, dem als Verdampfer eingesetzten Niedertemperaturwärmeübertrager 3 über einen Zulauf 7 zugeführt. Im Niedertemperaturwärmeübertrager 3 durchströmt das zu verdampfende Medium ein erstes u-förmig ausgebildetes Rohrbündel 67. An dem dem Zulauf 7 entgegengesetzten Ende der Rohre des u-förmigen Rohrbündels 67 wird das verdampfte Medium dem den Niedertemperaturwärmeübertrager 3 bildenden Abschnitt entnommen und mittels einer Sattdampfleitung 69 dem den Hochtemperaturwärmeübertrager 5 bildenden Abschnitt zugeführt. In dem den Hochtemperaturwärmeübertrager 5 bildenden Abschnitt verläuft ein zweites u-förmig ausgebildetes Rohrleitungsbündel 71, in dem das als Sattdampf zugeführte Medium überhitzt wird.

Zum Verdampfen und Überhitzen wird ein Wärmeträgermedium eingesetzt, das in der hier dargestellten Ausführungsform im Gegenstrom zu dem zu verdampfenden und zu überhitzenden Medium geführt wird. Hierzu ist in dem den Hochtemperaturwärmeübertrager 5 bildenden Abschnitt und in dem den Niedertemperaturwärmeübertrager 3 bildenden Abschnitt jeweils ein Umlenkblech 73 vorgesehen. Das Umlenkblech 73 ist dabei so positioniert, dass Rohrleitungen des u-förmig ausgebildeten Rohrbündels 67, 71 um das Umlenkblech 73 geführt werden. Auf diese Weise umströmt auch das Wärmeträgermedium das Umlenkblech 73 entlang der Rohrleitungen der u-förmigen Rohrbündel 67, 71.

Nach dem Durchströmen des den Hochtemperaturwärmeübertrager 5 bildenden Abschnitts wird das Wärmeträgermedium in den Verweilzeitbehälter 19 geleitet, durchläuft diesen und gelangt aus dem Verweilzeitbehälter 19 in den den Niedertemperaturwärmeübertrager 3 bildenden Abschnitt, durchströmt den den Niedertemperaturwärmeübertrager 3 bildenden Abschnitt entlang der darin aufgenommenen Rohrleitungen des ersten u-förmigen Rohrbündels 67 um das Umlenkblech 73 und wird danach über den Wärmeträgerablauf 23 aus dem Niedertemperaturwärmeübertrager entnommen.

Zur Regeneration des Wärmeträgermediums kann in den Verweilzeitbehälter 19 ein Regenerierungskatalysator zugegeben werden. Dieser wird zum Beispiel am Zulauf in den Verweilzeitbehälter 19 in das Wärmeträgermedium über eine Zugabestelle 75 für den Regenerierungskatalysator eindosiert.

Alternativ ist es selbstverständlich auch möglich, den Regenerierungskatalysator an jeder beliebigen Stelle in den Verweilzeitbehälter 19 einzudosieren. Vorzugsweise erfolgt die Zudosierung des Regenerierungskatalysators jedoch im Bereich des Zulaufs in den Verweilzeitbehälter 19 oder in den Wärmeträgerablauf 17 aus dem Hochtemperaturwärmeübertrager 5, der in den Verweilzeitbehälter 19 mündet.

Wenn als Regenerationskatalysator Wasser eingesetzt wird, wird dieses - unabhängig von der Ausführung des Hochtemperaturwärmeübertragers und Niedertemperaturwärmeübertragers - vorzugsweise in Strömungsrichtung hinter dem Verweilzeitbehälter 19 aus dem Wärmeträgermedium abgetrennt. Hierzu ist es zum Beispiel möglich, den Druck abzusenken, so dass in dem Wärmeträgermedium gelöstes Wasser in die Gasphase übergeht. Nach einer Phasentrennung kann dann das Wasser aus der Gasphase auskondensiert werden. Das auskondensierte Wasser wird vorzugswiese wieder als Regenerierungskatalysator in den Verweilzeitbehälter 19 zudosiert.

### Bezugszeichenliste

- 1: Vorrichtung
- 3: Niedertemperaturwärmeübertrager
- 5: Hochtemperaturwärmeübertrager
- 7: Zulauf zum Niedertemperaturwärmeübertrager
- 9: Ablauf aus dem Niedertemperaturwärmeübertrager
- 11: Zulauf zum Hochtemperaturwärmeübertrager
- 13: Ablauf aus dem Hochtemperaturwärmeübertrager
- 15: Wärmeträgerzulauf in den Hochtemperaturwärmeübertrager
- 17: Wärmeträgerablauf aus dem Hochtemperaturwärmeübertrager
- 19: Verweilzeitbehälter
- 21: Wärmeträgerzulauf in den Niedertemperaturwärmeübertrager
- 23: Wärmeträgerablauf aus dem Niedertemperaturwärmeübertrager
- 25: Speicherzelle
- 27: erste Rohrleitung
- 29: zweite Rohrleitung
- 31: Zellzwischenraum
- 33: untere Öffnung
- 35: unterer Bereich
- 37: obere Öffnung
- 39: oberer Bereich
- 41: erste Wandung
- 43: zweite Wandung
- 45: Boden
- 47: Überlauf
- 49: Gasraum
- 51: Deckel
- 53: Rohrleitung
- 55: Gasauslass
- 57: Zulauf in den Verweilzeitbehälter
- 59: Ablauf aus dem Verweilzeitbehälter
- 61: Boden
- 63: Ablauf
- 65: Rohrschlange
- 67: erstes u-förmiges Rohrbündel
- 69: Sattdampfleitung
- 71: zweites u-förmiges Rohrbündel
- 73: Umlenkblech
- 75: Zugabestelle für den Regenerierungskatalysator

## Patentansprüche

1. Vorrichtung zur Erwärmung eines Mediums in zwei in Reihe geschalteten Wärmeübertragern durch Wärmeübertragung von einem Wärmeträgermedium an das zu erwärmende Medium, umfassend einen Niedertemperaturwärmeübertrager (3) und einen Hochtemperaturwärmeübertrager (5) sowie eine Salzschmelze als Wärmeträgermedium, wobei die Wärmeübertrager (3, 5) so mit einer Verbindungsleitung miteinander verbunden sind, dass das Wärmeträgermedium den Hochtemperaturwärmeübertrager (5) und den Niedertemperaturwärmeübertrager (3) nacheinander durchströmt, wobei in der Verbindungsleitung mindestens ein Verweilzeitbehälter (19) angeordnet ist, **dadurch gekennzeichnet, dass** der Verweilzeitbehälter (19) eingerichtet ist, ausreichend Zeit bereitzustellen, um das Wärmeträgermedium zu regenerieren.

2. Vorrichtung gemäß Anspruch 1, **dadurch gekennzeichnet, dass** der Hochtemperaturwärmeübertrager (5) und der Niedertemperaturwärmeübertrager (3) jeweils einen Abschnitt eines Wärmeübertragers bilden und die Verbindungsleitung aus dem vom Wärmeträgermedium durchströmten Bereich des Niedertemperaturwärmeübertragers abzweigt und in den vom Wärmeträgermedium durchströmten Bereich des Hochtemperaturwärmeübertragers mündet.

3. Vorrichtung gemäß Anspruch 2, **dadurch gekennzeichnet, dass** der vom Wärmeträgermedium durchströmte Bereich zwischen Niedertemperaturwärmeübertrager (3) und Hochtemperaturwärmeübertrager (5) eine Strömungssperre aufweist und die Verbindungsleitung den vom Wärmeträgermedium durchströmten Bereich des Niedertemperaturwärmeübertragers (3) und des Hochtemperaturwärmeübertragers (5) miteinander verbindet, so dass das Wärmeträgermedium aus dem den Hochtemperaturwärmeübertrager (5) bildenden Abschnitt über die Verbindungsleitung in den den Niedertemperaturwärmeübertrager (3) bildendenden Abschnitt oder aus dem den Niedertemperaturwärmeübertrager (3) bildenden Abschnitt über die Verbindungsleitung in den den Hochtemperaturwärmeübertrager (5) bildenden Abschnitt strömt.

4. Vorrichtung gemäß einem der Ansprüche 1 bis 3, **dadurch gekennzeichnet, dass** der Verweilzeitbehälter (19) mindestens zwei Speicherzellen (25) umfasst und die einzelnen Speicherzellen (25) in Richtung vom Niedertemperaturwärmeübertrager (3) zum Hochtemperaturwärmeübertrager (5) jeweils über eine Verbindung vom unteren Bereich einer ersten Speicherzelle (25) zum oberen Bereich einer benachbarten zweiten Speicherzelle (25) miteinander verbunden sind, wobei die Verbindung zwischen zwei Speicherzellen (25) vorzugsweise einen Zellzwischenraum (31) umfasst, wobei die Verbindung vom Zellzwischenraum (31) zum oberen Bereich der zweiten Speicherzelle (25) mit einem Überlauf (47) und vom Zellzwischenraum (31) zum unteren Bereich der ersten Speicherzelle (25) durch eine Trennwand (41) mit einer Öffnung (33) ausgeführt ist, so dass bei einer Durchströmung der Speicherzellen (25) vom Hochtemperaturwärmeübertrager (5) zum Niedertemperaturwärmeübertrager (3) die Flüssigkeit jeweils durch die Öffnung (33) im unteren Bereich der Trennwand (41) in den Zellzwischenraum strömt und über den Überlauf (47) aus dem Zellzwischenraum (31) in die zweite Speicherzelle (25) oder bei Strömung in entgegengesetzter Richtung über den Überlauf (47) in den Zellzwischenraum (31) und durch die Öffnung (33) im unteren Bereich der Trennwand (41) aus dem Zellzwischenraum (41) in die erste Speicherzelle (25) fließt.

5. Vorrichtung gemäß Anspruch 4, **dadurch gekennzeichnet, dass** mindestens eine Speicherzelle (25) mit einem Deckel (51) verschlossen ist, so dass sich zwischen der Flüssigkeit in der Speicherzelle (25) und dem Deckel (51) ein Gasraum (49) ausbildet, wobei vorzugsweise aus mindestens einem Gasraum (49) eine Rohrleitung (53) abzweigt, die in die Flüssigkeit einer Speicherzelle (25), die näher an dem Niedertemperaturwärmeübertrager (3) positioniert ist oder in die Flüssigkeit in der Verbindung zweier benachbarter Speicherzellen (25) eintaucht, wobei mindestens eine der benachbarten Speicherzellen (25) eine niedrigere Temperatur aufweist als die Temperatur der Speicherzelle (25), aus deren Gasraum (49) die Rohrleitung (53) abzweigt und wobei insbesondere zusätzlich aus mindestens einem Gasraum (49) einer Speicherzelle (25) eine Rohrleitung abzweigt, die in die Flüssigkeit einer Speicherzelle (25) eintaucht, die näher zum Hochtemperaturwärmeübertrager (5) positioniert ist.

6. Vorrichtung gemäß Anspruch 4 oder 5, **dadurch gekennzeichnet, dass** alle Speicherzellen (25) mit einem Deckel (51) verschlossen sind und aus allen Speicherzellen (25) außer derjenigen, die am nähesten zum Niedertemperaturwärmeübertrager (3) positioniert ist, am Deckel (51) eine Rohrleitung (53) abzweigt, die in der benachbarten Speicherzelle (25), die näher zum Niedertemperaturwärmeübertrager (3) positioniert ist, oder in der Verbindung der Speicherzelle (25) zur benachbarten Speicherzelle (25), die näher zum Niedertemperaturwärmeübertrager (3) positioniert ist, mündet, und aus dem Deckel (51) der Speicherzelle (25), die am nähesten zum Niedertemperaturwärmeübertrager (3) positioniert ist, ein Gasauslass (55) abzweigt.

7. Vorrichtung gemäß einem der Ansprüche 4 bis 6, **dadurch gekennzeichnet, dass** alle Speicherzellen (25) mit einem Deckel (51) verschlossen sind und aus allen Speicherzellen (25) außer der, die am nähesten zum Hochtemperaturwärmeübertrager (5) positioniert ist, eine Rohrleitung aus dem Deckel (51) abzweigt, die in die Flüssigkeit der benachbarten Speicherzelle (25), die näher zum Hochtemperaturwärmeübertrager (5) positioniert ist, eintaucht.

8. Vorrichtung gemäß einem der Ansprüche 5 bis 7, **dadurch gekennzeichnet, dass** an mindestens einem in die Flüssigkeit eingetauchten Ende der Rohrleitung (53) ein Gasverteiler ausgebildet ist, mit dem durch die Rohrleitung (53) strömendes Gas in Form kleiner Bläschen in der Flüssigkeit verteilt wird.

9. Vorrichtung gemäß einem der Ansprüche 5 bis 8, **dadurch gekennzeichnet, dass** die aus dem Deckel (51) abzweigenden Rohrleitungen (53) mindestens in das untere Drittel der Flüssigkeit eintauchen, wenn die Speicherzelle (25) bis zum Überlauf (47) befüllt ist.

10. Vorrichtung gemäß einem der Ansprüche 5 bis 9, **dadurch gekennzeichnet, dass** in der Rohrleitung (53) ein Verdichter aufgenommen ist, mit dem das Gas in die Flüssigkeit der benachbarten Speicherzelle (25) oder den Zellzwischenraum (31) transportiert wird.

11. Vorrichtung gemäß einem der Ansprüche 4 bis 10, **dadurch gekennzeichnet, dass** in der Verbindung zwischen zwei benachbarten Speicherzellen (25) eine Vorrichtung zur Förderung der Flüssigkeit angeordnet ist.

12. Vorrichtung gemäß einem der Ansprüche 1 bis 11, **dadurch gekennzeichnet, dass** der Niedertemperaturwärmeübertrager (3) ein Verdampfer und der Hochtemperaturwärmeübertrager (5) ein Überhitzer ist.

13. Vorrichtung gemäß einem der Ansprüche 1 bis 12, dass vor dem Verweilzeitbehälter (19) eine Zugabestelle für einen Regenerierungskatalysator (75) positioniert ist, wobei vorzugsweise eine Steuerungseinheit oder Regeleinheit umfasst ist, mit der die Zugabe des Regenerierungskatalysators gesteuert und/oder geregelt wird.

14. Vorrichtung gemäß einem der Ansprüche 1 bis 13, **dadurch gekennzeichnet, dass** der Regenerierungskatalysator Wasser ist.

15. Verwendung der Vorrichtung gemäß einem der Ansprüche 1 bis 14 als Verdampfer und Überhitzer in einem Solarkraftwerk.

## Claims

1. An apparatus for heating a medium in two heat exchangers, connected in series, by way of heat transfer from a heat-carrier medium to the medium to be heated, comprising a low-temperature heat exchanger (3) and a high-temperature heat exchanger (5) and also a salt melt as heat-carrier medium, wherein the heat exchangers (3, 5) are connected to one another by way of a connecting line in such a way that the heat-carrier medium flows through the high-temperature heat exchanger (5) and the low-temperature heat exchanger (3) in succession, wherein at least one holding container (19) is arranged in the connecting line, wherein the holding container (19) is configured to provide a sufficient amount of time for the heat-transfer medium to be regenerated.

2. The apparatus as claimed in claim 1, wherein the high-temperature heat exchanger (5) and the low-temperature heat exchanger (3) each form a section of a heat exchanger, and the connecting line branches off from that region of the low-temperature heat exchanger which is flowed through by the heat-transfer medium and opens out into that region of the high-temperature heat exchanger which is flowed through by the heat-transfer medium.

3. The apparatus as claimed in claim 2, wherein the region flowed through by the heat-transfer medium between low-temperature heat exchanger (3) and high-temperature heat exchanger (5) has a flow barrier, and the connecting line connects those regions of the low-temperature heat exchanger (3) and the high-temperature heat exchanger (5) which are flowed through by the heat-transfer medium to one another, so that the heat-transfer medium flows from the section forming the high-temperature heat exchanger (5) into the section forming the low-temperature heat exchanger (3) via the connecting line or from the section forming the low-temperature heat exchanger (3) into the section forming the high-temperature heat exchanger (5) via the connecting line.

4. The apparatus as claimed in one of claims 1 to 3, wherein the holding container (19) comprises at least two storage cells (25), and the individual storage cells (25) are connected to one another in the direction from the low-temperature heat exchanger (3) to the high-temperature heat exchanger (5), in each case via a connection from the lower region of a first storage cell (25) to the upper region of an adjacent second storage cell (25), wherein the connection between two storage cells (25) preferably comprises a cell intermediate space (31), wherein the connection is realized with an overflow (47) from the cell intermediate space (31) to the upper region of the second storage cell (25), and by a separating wall (41) with an opening (33) from the cell intermediate space (31) to the lower region of the first storage cell (25), so that the liquid, in the case of the storage cells (25) being flowed through from the high-temperature heat exchanger (5) to the low-temperature heat exchanger (3), in each case flows into the cell intermediate space through the opening (33) in the lower region of the separating wall (41) and from the cell intermediate space (31) into the second storage cell (25) via the overflow (47) or, in the case of flow in the opposite direction, flows into the cell intermediate space (31) via the overflow (47) and from the cell intermediate space (41) into the first storage cell (25) through the opening (33) in the lower region of the separating wall (41).

5. The apparatus as claimed in claim 4, wherein at least one storage cell (25) is closed off by a cover (51), so that a gas space (49) is formed between the liquid in the storage cell (25) and the cover (51), wherein preferably a pipeline (53) branches off from at least one gas space (49) and is immersed into the liquid of a storage cell (25) which is positioned closer to the low-temperature heat exchanger (3) or into the liquid in the connection of two adjacent storage cells (25), wherein at least one of the adjacent storage cells (25) has a temperature which is lower than the temperature of the storage cell (25) from whose gas space (49) the pipeline (53) branches off, and wherein in particular, in addition, a pipeline branches off from at least one gas space (49) of a storage cell (25) and is immersed into the liquid of a storage cell (25) which is positioned closer to the high-temperature heat exchanger (5).

6. The apparatus as claimed in claim 4 or 5, wherein all the storage cells (25) are closed off by a cover (51), and a pipeline (53) branches off at the cover (51) from all the storage cells (25) apart from the one positioned closest to the low-temperature heat exchanger (3) and opens out into the adjacent storage cell (25) which is positioned closer to the low-temperature heat exchanger (3) or into the connection of the storage cell (25) with respect to the adjacent storage cell (25) which is positioned closer to the low-temperature heat exchanger (3), and a gas outlet (55) branches off from the cover (51) of the storage cell (25) positioned closest to the low-temperature heat exchanger (3).

7. The apparatus as claimed in one of claims 4 to 6, wherein all the storage cells (25) are closed off by a cover (51), and a pipeline (53) branches off from the cover (51) from all the storage cells (25) apart from the one positioned closest to the high-temperature heat exchanger (5) and is immersed into the liquid of the adjacent storage cell (25) which is positioned closer to the high-temperature heat exchanger (5).

8. The apparatus as claimed in one of claims 5 to 7, wherein a gas distributor is formed at at least one end, immersed into the liquid, of the pipeline (53), by way of which gas distributor gas flowing through the pipeline (53) is distributed in the liquid in the form of small bubbles.

9. The apparatus as claimed in one of claims 5 to 8, wherein the pipelines (53) branching off from the cover (51) are immersed at least into the lower third of the liquid if the storage cell (25) is filled up to the overflow (47).

10. The apparatus as claimed in one of claims 5 to 9, wherein a compressor is accommodated in the pipeline (53), by way of which compressor the gas is transported into the liquid of the adjacent storage cell (25) or into the cell intermediate space (31).

11. The apparatus as claimed in one of claims 4 to 10, wherein an apparatus for conveying the liquid is arranged in the connection between two adjacent storage cells (25).

12. The apparatus as claimed in one of claims 1 to 11, wherein the low-temperature heat exchanger (3) is an evaporator and the high-temperature heat exchanger (5) is a superheater.

13. The apparatus as claimed in one of claims 1 to 12, in that a dosing point for a regeneration catalyst (75) is positioned in front of the holding container (19), wherein preferably a control unit or regulating unit by way of which the feeding of the regeneration catalyst is controlled and/or regulated is comprised.

14. The apparatus as claimed in one of claims 1 to 13, wherein the regeneration catalyst is water.

15. The use of the apparatus as claimed in one of claims 1 to 14 as an evaporator and superheater in a solar power plant.

## Revendications

1. Dispositif pour chauffer un milieu dans deux échangeurs de chaleur montés en série par transfert de chaleur d'un milieu caloporteur au milieu à chauffer, comprenant un échangeur de chaleur à basse température (3) et un échangeur de chaleur à haute température (5) ainsi qu'un sel fondu comme milieu caloporteur, les échangeurs de chaleur (3, 5) étant reliés entre eux par une conduite de jonction, de telle sorte que le fluide caloporteur traverse successivement l'échangeur de chaleur à haute température (5) et l'échangeur de chaleur à basse température (3), au moins un réservoir (19) de stockage temporaire étant disposé dans la conduite de jonction, **caractérisé en ce que** le réservoir (19) de stockage temporaire est conçu pour fournir un temps suffisant pour régénérer le fluide caloporteur.

2. Dispositif selon la revendication 1, **caractérisé en ce que** l'échangeur de chaleur à haute température (5) et l'échangeur de chaleur à basse température (3) forment chacun une section d'un échangeur de chaleur et la conduite de jonction part, de façon dérivée, de la zone de l'échangeur de chaleur à basse température traversée par le fluide caloporteur et débouche dans la zone de l'échangeur de chaleur à haute température traversée par le fluide caloporteur.

3. Dispositif selon la revendication 2, **caractérisé en ce que** la zone traversée par le fluide caloporteur entre l'échangeur de chaleur à basse température (3) et l'échangeur de chaleur à haute température (5) présente une barrière d'écoulement et la conduite de jonction relie entre elles les zones de l'échangeur de chaleur à basse température (3) et de l'échangeur de chaleur à haute température (5) traversées par le fluide caloporteur, de sorte que le fluide caloporteur s'écoule depuis la section formant l'échangeur de chaleur à haute température (5) jusque dans la section formant l'échangeur de chaleur à basse température (3) via la conduite de jonction, ou depuis la section formant l'échangeur de chaleur à basse température (3) jusque dans la section formant l'échangeur de chaleur à haute température (5) via la conduite de jonction.

4. Dispositif selon l'une des revendications 1 à 3, **caractérisé en ce que** le réservoir (19) de stockage temporaire comprend au moins deux cellules de stockage (25) et **en ce que** les différentes cellules de stockage (25) sont reliées entre elles dans le sens allant de l'échangeur de chaleur à basse température (3) vers l'échangeur de chaleur à haute température (5), chacune, par une liaison, allant de la zone inférieure d'une première cellule de stockage (25) vers la zone supérieure d'une deuxième cellule de stockage (25) voisine, la liaison entre deux cellules de stockage (25) comprenant de préférence un espace intermédiaire de cellule (31), la liaison entre l'espace intermédiaire de cellule (31) et la zone supérieure de la deuxième cellule de stockage (25) étant réalisée avec un trop-plein (47), et, entre l'espace intermédiaire de cellule (31) et la zone inférieure de la première cellule de stockage (25), par une paroi de séparation (41) avec une ouverture (33), de sorte que, lors d'un écoulement à travers les cellules de stockage (25) depuis l'échangeur de chaleur à haute température (5) vers l'échangeur de chaleur à basse température (3), le liquide s'écoule respectivement à travers l'ouverture (33) dans la zone inférieure de la paroi de séparation (41) dans l'espace inter-cellules et sort de l'espace inter-cellules par le trop-plein (47) de l'espace intermédiaire de cellule (31) jusque dans la deuxième cellule de stockage (25) ou, en cas d'écoulement dans le sens opposé, par le trop-plein (47) dans l'espace intermédiaire de cellule (31) et s'écoule par l'ouverture (33) dans la zone inférieure de la paroi de séparation (41), depuis l'espace intermédiaire de cellule (41) jusque dans la première cellule de stockage (25).

5. Dispositif selon la revendication 4, **caractérisé en ce qu'**au moins une cellule de stockage (25) est fermée par un couvercle (51), de sorte qu'un espace de gaz (49) se forme entre le liquide présent dans la cellule de stockage (25) et le couvercle (51) ; de préférence, une conduite (53) part d'au moins un espace de gaz (49) et plonge dans le liquide d'une cellule de stockage (25) qui est positionnée plus près de l'échangeur de chaleur à basse température (3) ou dans le liquide dans la jonction de deux cellules de stockage (25) voisines, au moins l'une des cellules de stockage (25) voisines présentant une température inférieure à la température de la cellule de stockage (25) à partir de l'espace de gaz (49) de laquelle part la conduite (53), et, en particulier, une conduite part en outre d'au moins un espace de gaz (49) d'une cellule de stockage (25) et plonge dans le liquide d'une cellule de stockage (25) qui est positionnée plus près de l'échangeur de chaleur à haute température (5).

6. Dispositif selon la revendication 4 ou 5, **caractérisé en ce que** toutes les cellules de stockage (25) sont fermées par un couvercle (51) et **en ce que**, de toutes les cellules de stockage (25), à l'exception de celle qui est positionnée le plus près de l'échangeur de chaleur à basse température (3), une conduite (53) part du couvercle (51) et débouche dans la cellule de stockage (25) voisine, positionnée plus près de l'échangeur de chaleur basse température (3), ou dans la liaison de la cellule de stockage (25) avec la cellule de stockage voisine (25) positionnée plus près de l'échangeur de chaleur basse température (3), et une sortie de gaz (55) part du couvercle (51) de la cellule de stockage (25) positionnée la plus proche de l'échangeur de chaleur basse température (3).

7. Dispositif selon l'une des revendications 4 à 6, **caractérisé en ce que** toutes les cellules de stockage (25) sont fermées par un couvercle (51) et **en ce que**, depuis toutes les cellules de stockage (25), sauf celle qui est positionnée le plus près de l'échangeur de chaleur à haute température (5), part du couvercle (51) une conduite qui plonge dans le liquide de la cellule de stockage (25) voisine, positionnée plus près de l'échangeur de chaleur à haute température (5).

8. Dispositif selon l'une des revendications 5 à 7, **caractérisé en ce qu'**un distributeur de gaz est formé à au moins une extrémité de la conduite (53) plongeant dans le liquide, permettant de répartir dans le liquide, sous forme de petites bulles, le gaz circulant dans la conduite (53).

9. Dispositif selon l'une des revendications 5 à 8, **caractérisé en ce que** les conduites (53) partant du couvercle (51) plongent au moins dans le tiers inférieur du liquide lorsque la cellule de stockage (25) est remplie jusqu'au trop-plein (47).

10. Dispositif selon l'une des revendications 5 à 9, **caractérisé en ce que** la conduite (53) reçoit un compresseur permettant de transporter le gaz dans le liquide de la cellule de stockage (25) adjacente à l'espace inter-cellules (31) ou située dans celui-ci.

11. Dispositif selon l'une des revendications 4 à 10, **caractérisé en ce qu'**un dispositif de transport du liquide est disposé dans la liaison entre deux cellules de stockage (25) voisines.

12. Dispositif selon l'une des revendications 1 à 11, **caractérisé en ce que** l'échangeur de chaleur à basse température (3) est un évaporateur et l'échangeur de chaleur à haute température (5) est un surchauffeur.

13. Dispositif selon l'une des revendications 1 à 12, en ce qu'un point d'ajout d'un catalyseur de régénération (75) est positionné en amont du réservoir (19) de stockage temporaire, comprenant de préférence une unité de commande ou une unité de régulation permettant de commander et/ou de réguler l'ajout du catalyseur de régénération.

14. Dispositif selon l'une quelconque des revendications 1 à 13, **caractérisé en ce que** le catalyseur de régénération est de l'eau.

15. Utilisation du dispositif selon l'une des revendications 1 à 14 en tant qu'évaporateur et surchauffeur dans une centrale solaire.
